# EUROPÄISCHE PATENTANMELDUNG

(11) **EP 4 488 238 A1**
(43) Veröffentlichungstag der Anmeldung: **08.01.2025**
(21) Anmeldenummer: 23184100.8
(22) Anmeldetag: 07.07.2023
(51) Int. Cl.: C02F 1/52, C01F 7/164, C02F 1/58, C04B 11/26, C04B 22/00, C04B 22/06, C04B 22/14, C04B 40/00, C04B 35/626, C02F 101/10

(54) **VERFAHREN ZUR BINDUNG VON SULFAT IN EINEM GEWÄSSER, DURCH DAS VERFAHREN HERGESTELLTES PRODUKT, GEGLÜHTE MISCHUNG ZUR VERWENDUNG IM VERFAHREN, UND VERWENDUNG EINER SOLCHEN MISCHUNG**

(71) Anmelder: OASE GmbH, 48477 Hörstel (DE)
(72) Erfinder: MUCK, Thorsten, 49479 Ibbenbüren (DE)
(74) Vertreter: Isarpatent

(57) **Zusammenfassung**

Die vorliegende Erfindung betrifft ein Verfahren zur Bindung von Sulfat in einem Gewässer umfassend Sulfat, eine durch Glühen einer Mischung umfassend Calciumoxid und ein Calcium-Aluminium-Oxid und/oder ein Calciumaluminat und Abkühlen hergestellte geglühte Mischung zur Sulfatbindung in einem Gewässer, wie auch die Verwendung einer Pulvermischung umfassend CaO und mindestens ein Element der Mayenit-Obergruppe und/oder umfassend mindestens ein Calcium-Aluminium-Alumosilikat und/oder mindestens ein Calciumalumosilikat und/oder ein Calciumsilikat und/oder der geglühten Mischung zur Sulfatbindung in einem Gewässer.

## Beschreibung

Die vorliegende Erfindung betrifft ein Verfahren zur Bindung von Sulfat in einem Gewässer umfassend Sulfat, ein durch das Verfahren hergestelltes Produkt, eine durch Glühen einer Mischung umfassend Calciumoxid und ein Calcium-Aluminium-Oxid und/oder ein Calciumaluminat und Abkühlen hergestellte geglühte Mischung zur Sulfatbindung in einem Gewässer, wie auch die Verwendung einer Pulvermischung umfassend CaO und mindestens ein Mineral der Mayenit-Obergruppe und/oder umfassend mindestens ein Calcium-Aluminium-Alumosilikat und/oder mindestens ein Calciumalumosilikat und/oder ein Calciumsilikat und/oder der geglühten Mischung zur Sulfatbindung in einem Gewässer.

### Stand der Technik

Sulfationen entstehen bei vielen Prozessen, in denen mit Schwefelsäure gearbeitet wird, wie auch bei der Schwefelsäureherstellung selbst. Daneben kann ein Eintrag von Sulfationen in die Natur auch auf andere Weise erfolgen, etwa durch Weiterreaktion von Schwefeloxiden, welche bei Verbrennungsvorgängen mit fossilen Brennstoffen entstehen können, oder durch Düngung.

Die Sulfationen sind hierbei jedoch in vielen Gewässern problematisch und umweltbelastendund stören das ökologlische Gleichgewicht. Daneben können durch Sulfationen auch Gebäude und Bauten angegriffen werden. Entsprechend besteht ein Bedarf, übermäßige Sulfatgehalte zu reduzieren.

Im Artikel "Calciumaluminat-Verfahren zur weitergehenden Fällung von Sulfat und Schwermetallen" in Wasser, Luft und Boden, Zeitschrift für Umwelttechnik, 10, Oktober 1992 wird eine Fällung von Sulfat in Industrieabwässern unter Verwendung von speziell abgestimmtem Calciumaluminat offenbart. Die Entfernung von Sulfaten und Calcium aus Abwasserströmen unter Bildung von Ettringit ist zudem auch der WO 98/55405 A1 zu entnehmen.

Bei den bisherigen Verfahren der Sulfatbindung bzw. Sulfatentfernung verbleibt jedoch abschließend immer noch eine größere Menge an Sulfationen im Gewässer. Entsprechend besteht ein Bedarf an Verfahren, mit denen Sulfationen in Gewässern effizient gebunden werden können.

### Zusammenfassung der Erfindung

Es wurde erfindungsgemäß gefunden, dass durch Zugabe von geglühten Mischungen, welche neben Calciumaluminat und/oder Calcium-Aluminium-Oxid zusätzlich noch CaO enthalten, eine weitergehende Sulfatbindung möglich ist.

Ein erster Aspekt der vorliegenden Erfindung betrifft ein Verfahren zur Bindung von Sulfat in einem Gewässer umfassend Sulfat, das Verfahren umfassend:
Bereitstellen einer Mischung umfassend Calciumoxid und ein Calcium-Aluminium-Oxid und/oder Calciumaluminat;
Glühen der Mischung umfassend Calciumoxid und Calcium-Aluminium-Oxid und/oder
Calciumaluminat und Abkühlen der Mischung zur Herstellung einer geglühten Mischung; und
Zugabe der geglühten Mischung zum Gewässer umfassend Sulfat, wobei das Sulfat gebunden wird.

Zudem offenbart in einem zweiten Aspekt ist ein Verfahren zur Bindung von Sulfat in einem Gewässer umfassend Sulfat, das Verfahren umfassend:
Bereitstellen einer Mischung, insbesondere Pulvermischung. umfassend CaO und mindestens ein Mineral der Mayenit-Obergruppe, bevorzugt umfassend Mayenit der Summenformel Ca₆Al₇O_{16.5} (bzw. Ca₁₂Al₁₄O₃₃),
und/oder mindestens ein Calcium-Aluminium-Alumosilikat und/oder mindestens ein Calciumalumosilikat und/oder mindestens ein Calciumsilikat,
wobei zumindest das Calcium in einem Massenanteil von 27,0 - 45,0 Gew.%, bevorzugt 30,0 - 40,0 Gew.%, weiter bevorzugt 32,0 - 37,0 Gew.%, und das Aluminium in einem Massenanteil von 20,0 - 28,0 Gew.%, bevorzugt 21,0 - 27,5 Gew.%, weiter bevorzugt 21,5 - 25,5 Gew.%, bezogen auf die Mischung, insbesondere Pulvermischung, in der Mischung, insbesondere Pulvermischung, enthalten ist (wobei die jeweiligen Grenzwerte beinhaltet sind); und
Zugabe der Mischung umfassend CaO und mindestens ein Mineral der Mayenit-Obergruppe und/oder umfassend mindestens ein Calcium-Aluminium-Alumosilikat und/oder mindestens ein Calciumalumosilikat und/oder ein Calciumsilikat zum Gewässer umfassend Sulfat, wobei das Sulfat gebunden wird.

Ein dritter Aspekt der Erfindung betrifft eine geglühte Mischung zur Sulfatbindung in einem Gewässer, hergestellt durch Bereitstellen einer Mischung umfassend Calciumoxid und ein Calcium-Aluminium-Oxid und/oder ein Calciumaluminat; und
Glühen der Mischung umfassend Calciumoxid und ein Calcium-Aluminium-Oxid und/oder ein Calciumaluminat und Abkühlen der Mischung zur Herstellung einer geglühten Mischung zur Sulfatbindung in einem Gewässer.

In einem vierten Aspekt ist auf ein durch ein erfindungsgemäßes Verfahren hergestelltes Produkt umfassend gebundenes Sulfat gerichtet.

Zudem offenbart ist die Verwendung einer Pulvermischung umfassend CaO und mindestens ein Mineral der Mayenit-Obergruppe und/oder umfassend mindestens ein Calcium-Aluminium-Alumosilikat und/oder mindestens ein Calciumalumosilikat und/oder ein Calciumsilikat und/oder einer erfindungsgemäßen geglühten Mischung zur Sulfatbindung in einem Gewässer.

Weitere Aspekte der vorliegenden Erfindung sind den abhängigen Ansprüchen und der detaillierten Beschreibung zu entnehmen.

### Beschreibung der Figuren

Die beiliegenden Zeichnungen sollen Ausführungsformen der vorliegenden Erfindung veranschaulichen und ein weiteres Verständnis dieser vermitteln. Im Zusammenhang mit der Beschreibung dienen sie der Erklärung von Konzepten und Prinzipien der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander dargestellt. Gleiche, funktionsgleiche und gleich wirkende Elemente, Merkmale und Komponenten sind in den Figuren der Zeichnungen, sofern nichts anderes ausgeführt ist, jeweils mit denselben Bezugszeichen versehen.

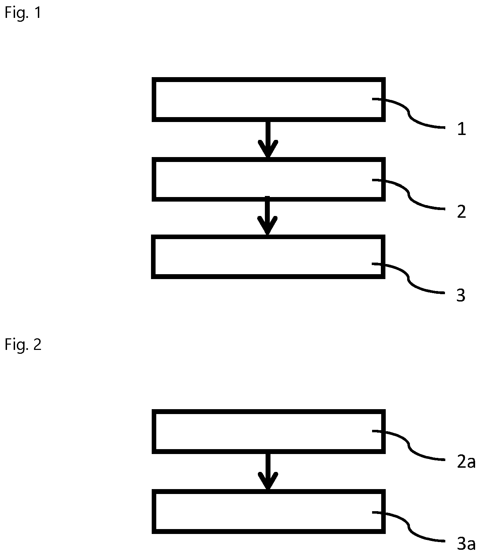

Figur 1 zeigt schematisch ein erfindungsgemäßes Verfahren des ersten Aspekts, und Figur 2 zeigt schematisch ein erfindungsgemäßes Verfahren des zweiten Aspekts.

### Detaillierte Beschreibung der Erfindung

### Definitionen

So nicht anderweitig definiert haben hierin verwendete technische und wissenschaftliche Ausdrücke dieselbe Bedeutung, wie sie von einem Fachmann auf dem Fachgebiet der Erfindung gemeinhin verstanden wird.

Unter Gewässern bzw. Wässern werden im Sinne der vorliegenden Erfindung alle Wässer bzw. Gewässer verstanden, wie Teiche, Seen, Flüsse, Talsperren, küstennahe Gewässer, Fjorde, Brackwasserseen, Meeresbuchten, Seewasser, Aufzuchtstationen für Fische und andere Seetiere, Aquarien, Wasser in Speichersystemen für die Landwirtschaft oder Trinkwasserreservoire sowie Grundwasserleiter, wobei die voranstehenden Wässer auch Böden, Sedimente und/oder Schlämme sowie Sink- und Schwebstoffe enthalten können. Unter Sedimenten werden im Sinne der vorliegenden Erfindung in Wässern befindliche Festkörper, wie z. B. in Teichen, Seen und Flüssen, verstanden. Die Schlämme können beispielsweise aus Kläranlagen, Abwasserfilter etc. stammen und/oder sich am Boden von Wässern befinden. Bevorzugte Wässer sind Süßwässer mit Sedimenten und/oder Schlammablagerungen, wie etwa Teiche, Seen, etc., welche suboxische und/oder anoxische Zonen aufweisen und schnell kippen können, welche jedoch mit den vorliegenden Verfahren effektiv behandelt werden können. Insbesondere eignen sich die vorliegenden Verfahren für Gewässer mit niedrigerer Sulfatkonzentration, beispielsweise bis zu 2,5 g/L. Daneben ist die Sulfatentfernung auch bei der Meerwasserentsalzung vorteilhaft, um die Bildung von Gips zu vermeiden und somit Energie bei der Entsalzung durch geringere Belastung der Membranen zu sparen.

Bei der Identifikation und Benennung von Calcium-Aluminium-Oxid und/oder Calciumaluminat kann es im Rahmen der Erfindung auch zu Überschneidungen in der Definition kommen. Wissenschaftlich sind die Begriffe Calcium-Aluminium-Oxid und Calciumaluminat bisher nicht eindeutig voneinander abgegrenzt, sodass es zwischen beiden auch praktisch zu Überschneidungen kommt (s. z.B. A. Intiso et al., "The fascinating world of mayenite (Ca12Al14O33) and its derivatives", Rendiconti Lincei. Scienze Fisiche e Naturali, 2021, 32, 699.708, bei dem Mayenit im Abstract als mesoporöses Calcium-Aluminium-Oxid und im Abschnitt 1 als mesoporöses Calciumaluminat bezeichnet wird). So wird auch beispielsweise das Mineral Krotit wahlweise als Calcium-Aluminium-Oxid der chemischen Formel CaAl₂O₄ oder als Calciumaluminat der chemischen Formel CaO·Al₂O₃ bezeichnet. Entsprechend werden hier beide Begriffe sowohl alternativ wie auch synonym verwendet, da eine klare wissenschaftliche Unterscheidung nicht möglich ist. Neben Monocalciumaluminat, als Mineral zu finden als das oben genannte Krotit und Dmitryivanovit (CaO·Al₂O₃ (CA)), sind beispielsweise andere Calciumaluminate Tricalciumaluminat (3CaO·Al₂O₃ (C₃A)), Dodecacalciumheptaaluminat, als Mineral auch als Mayenit bekannt (12CaO·7Al₂O₃ (C₁₂A₇)), Monocalciumdialuminat (CaO·2Al₂O₃ (CA₂)), als Mineral als Grossit zu finden, und Monocalciumaluminat (CaO·6Al₂O₃ (CA₆)), als Mineral als Hibonit zu finden. Daneben sind auch synthetische oder exotische Calciumaluminate wie Brownmillerit zu nennen,

Mengenangaben im Rahmen der vorliegenden Erfindung beziehen sich auf Gew.%, soweit nicht anderweitig angegeben oder aus dem Kontext ersichtlich ist.

Der Normaldruck ist 101325 Pa = 1,01325 bar.

Ein erster Aspekt der vorliegenden Erfindung betrifft ein Verfahren zur Bindung von Sulfat in einem Gewässer umfassend Sulfat, das Verfahren umfassend:
Bereitstellen einer Mischung umfassend Calciumoxid und ein Calcium-Aluminium-Oxid und/oder Calciumaluminat;
Glühen der Mischung umfassend Calciumoxid und Calcium-Aluminium-Oxid und/oder Calciumaluminat und Abkühlen der Mischung zur Herstellung einer geglühten Mischung; und
Zugabe der geglühten Mischung zum Gewässer umfassend Sulfat, wobei das Sulfat gebunden wird.

Im Verfahren ist das Bereitstellen einer Mischung umfassend Calciumoxid und ein Calcium-Aluminium-Oxid und/oder Calciumaluminat nicht besonders beschränkt.

Die Mischung umfassend Calciumoxid und ein Calcium-Aluminium-Oxid und/oder Calciumaluminat ist erfindungsgemäß nicht besonders beschränkt, sofern Calciumoxid enthalten ist und zusätzlich mindestens ein Calcium-Aluminium-Oxid, mindestens ein Calciumaluminat, oder mindestens eines von beiden. Daneben enthält die Mischung gemäß bestimmten Ausführungsformen noch mindestens ein Calcium-Aluminium-Alumosilikat und/oder mindestens ein Calciumalumosilikat und /oder mindestens ein Silikat, beispielsweise Gehlenit (Ca₂Al((AlSi)O₇)) und/oder Calcio-Olivin (Ca₂(SiO₄)).

Das Calciumoxid ist nicht besonders beschränkt. Es kann auf geeignete Weise der Mischung zugesetzt werden, beispielsweise in Form der technisch reinen oder reinen Verbindung, aber auch als gebrannter Kalk bzw. Branntkalk.

Das Calcium-Aluminium-Oxid und/oder Calciumaluminat sind ebenfalls nicht besonders beschränkt. Auch können in der Mischung mehr als ein Calcium-Aluminium-Oxid und/oder Calciumaluminat enthalten sein. Gemäß bestimmten Ausführungsformen wird das Calcium-Aluminium-Oxid und/oder Calciumaluminat als - beispielsweise natürliches, beispielsweise bergmännisch abgebautes - Mineraliengemisch umfassend Calcium-Aluminium-Oxid und/oder Calciumaluminat bereitgestellt, welches dann mit Calciumoxid geeignet zur Herstellung der Mischung vermischt wird. Gemäß bestimmten Ausführungsformen enthält das Mineraliengemisch und entsprechend die Mischung zumindest Krotit und Grossit und gemäß bestimmten Ausführungsformen Mayenit, wobei Mayenit bevorzugt in einer Menge von beispielsweise < 0 Gew.% und weniger als 7 Gew.%, bevorzugt weniger als 4 Gew.% und weiter bevorzugt weniger als 2 Gew.%, bezogen auf das Mineraliengemisch, vorhanden ist. Das Mineraliengemisch bzw. die Mischung umfasst zudem gemäß bestimmten, bevorzugten, Ausführungsformen mindestens ein Calcium-Aluminium-Alumosilikat und/oder mindestens ein Calciumalumosilikat und /oder mindestens ein Calcium-Aluminium-Silikat, insbesondere Gehlenit (C₂AS, Ca₂Al((AlSi)O₇)) und/oder Calcio-Olivin (C₂S, Ca₂(SiO₄)).

Gemäß bestimmten Ausführungsformen sind zumindest das Calcium in einem Massenanteil von 20,0 - 29,0 Gew.%, bevorzugt 23,0 - 26,0 Gew.%, weiter bevorzugt 24,0 - 25,8 Gew.%, und das Aluminium in einem Massenanteil von 27,0 - 35,0 Gew.%, bevorzugt 27,2 - 30,5 Gew.%, weiter bevorzugt 27,5 - 29,5 Gew.%, bezogen auf das Mineraliengemisch, im Mineraliengemisch enthalten(wobei die jeweiligen Grenzwerte beinhaltet sind). Hierdurch können beim Glühen bevorzugte Phasen zur Sulfatbindung erzielt werden.

Gemäß bestimmten Ausführungsformen enthält die Mischung Calciumoxid und ein Mineralgemisch umfassend Calcium-Aluminium-Oxid und/oder Calciumaluminat. Gemäß bestimmten Ausführungsformen enthält die Mischung umfassend Calciumoxid und ein Mineralgemisch umfassend Calcium-Aluminium-Oxid und/oder Calciumaluminat das Calciumoxid und das Mineralgemisch umfassend Calcium-Aluminium-Oxid und/oder Calciumaluminat in einem Verhältnis (w/w) von 5:95 bis 50: 50, bevorzugt 10:90 bis 30:70. Das heißt, dass das Calciumoxid mit 5 bis 50 Gewichtsteilen, bevorzugt 10 bis 30 Gewichtsteilen, im Verhältnis zum Calcium-Aluminium-Oxid, Calciumaluminat, oder beiden (so beide entsprechend der Nomenklatur als vorhanden anzusehen sind) mit 50 bis 95 Gewichtsteilen, bevorzugt 70 bis 90 Gewichtsteilen, in der Mischung enthalten sind. Durch eine entsprechende Einstellung lässt sich die Sulfatbindung weiter verbessern. Das Mineraliengemisch kann hier beispielsweise, wie oben beschrieben, ein natürliches, z.B. bergmännisch abgebautes, Mineraliengemisch sein.

Erfindungsgemäß kann die Mischung umfassend Calciumoxid und Calcium-Aluminium-Oxid vor dem Glühen vermengt und gemahlen werden. Das Vermengen und Mahlen ist hierbei nicht besonders beschränkt, und kann auf geeignete Weise erfolgen, beispielsweise mit einer geeigneten Mahlvorrichtung, bevorzugt mit einer Kugelmühle. Durch das Vermengen und Mahlen kann ein Pulver erzielt werden, das beim Glühen der Mischung zu einer vorteilhaften Phasenbildung für eine effiziente Sulfatbindung im Verfahren führt.

Gemäß bestimmten Ausführungsformen erfolgt das Vermengen und Mahlen zu einer Partikelgröße von > 0.0 bis kleiner oder gleich 20,0 mm, bevorzugt zu einer Partikelgröße von > 0,0 bis kleiner oder gleich 10,0 mm, weiter bevorzugt zu einer Partikelgröße von > 0,0 bis kleiner oder gleich 5,0 mm, noch weiter bevorzugt bis zu einer Partikelgröße von > 0,0 bis kleiner oder gleich 1,0 mm, z.B. zu einer Partikelgröße > 0,0 bis kleiner oder gleich 0,5 mm. Die Partikelgröße wird hierbei gemäß bestimmten Ausführungsformen durch Sieben der vermengten und gemahlenen Mischung bestimmt.

Im Anschluss an die Bereitstellung und ein eventuelles Vermengen, Mahlen und ggf. Sieben kann dann das Glühen der Mischung erfolgen.

Das Glühen der Mischung umfassend Calciumoxid und Calcium-Aluminium-Oxid und/oder Calciumaluminat und Abkühlen der Mischung zur Herstellung einer geglühten Mischung ist ebenfalls nicht besonders beschränkt. Es kann beispielsweise in einem geeigneten Ofen erfolgen.

Gemäß bestimmten Ausführungsformen wird das Glühen bei einer Temperatur von 800 bis 1500°C, bevorzugt bei einer Temperatur von 900 bis 1450°C, weiter bevorzugt bei einer Temperatur von 950 bis 1400°C durchgeführt. Bei einer solchen Temperatur ergibt sich eine vorteilhafte Phasenumwandlung der Mischung, welche eine weiter verbesserte Sulfatbindung im Verfahren erlaubt. Auch ist die Zeitdauer des Glühens nicht besonders beschränkt und erfolgt beispielsweise für 1 bis 12 h, z.B. 3 bis 8 h, z.B. 6 h.

Darüber hinaus ist auch das Abkühlen nicht besonders beschränkt und erfolgt üblicherweise auf Raumtemperatur (18-25°C), beispielsweise durch natürliches Abkühlen, beispielsweise in einem Exsikkator oder unter Raumbedingungen.

Zudem ist die Zugabe der geglühten Mischung zum Gewässer umfassend Sulfat, wobei das Sulfat gebunden wird, nicht besonders beschränkt. Gemäß bestimmten Ausführungsformen erfolgt die Zugabe der geglühten Mischung zum Gewässer umfassend Sulfat durch Verteilung der geglühten Mischung in das Gewässer, und/oder nach der Zugabe erfolgt ein natürliches und/oder künstlich herbeigeführtes Durchmischen. Die Verteilung ist nicht besonders beschränkt und kann beispielsweise ein Verstreuen umfassen. Eine homogene Verteilung ist hierbei bevorzugt. Ein natürlich und/oder künstlich herbeigeführtes Durchmischen lässt sich beispielsweise durch Einbringen in eine natürliche Strömung und/oder ein Erzeugen einer künstlichen Strömung erreichen. Durch die Verteilung und/oder das Durchmischen kann die geglühte Mischung schneller zur Sulfatreduktion beitragen und Nebenreaktionen können besser vermieden werden.

Gemäß bestimmten Ausführungsformen erfolgt das Durchmischen nach der Zugabe für mindestens 30 min, bevorzugt mindestens 1 h, bevorzugt mindestens 2 h. Eine längere Durchmischung kann die Sulfatbindung fördern.

Gemäß bestimmten Ausführungsformen erfolgt die Zugabe bei einer Temperatur von 20 bis 40°C, bevorzugt 23 bis 37°C, weiter bevorzugt 27 bis 33°C. Entsprechend ist beispielsweise eine Einbringung in natürliche Gewässer in Sommermonaten bevorzugt.

Vor der Zugabe der geglühten Mischung zum Gewässer kann das Gewässer gemäß bestimmten Ausführungsformen noch auf einen geeigneten pH gebracht werden, beispielsweise in einem pH-Bereich von 6,0 bis 13,0, beispielsweise 7,0 bis 12,5, bevorzugt 10,0 bis 12,0, beispielsweise ungefähr 11,0. Ggf. kann der pH geeignet durch beispielsweise CaO und/oder NaOH und/oder Kalkmilch eingestellt werden.

Nach der Sulfatbindung kann ein gebildetes Produkt aus dem Gewässer gemäß bestimmten Ausführungsformen geeignet abgetrennt werden, also eine Abtrennung des Produkts mit dem gebundenen Sulfat erfolgen. Die Abtrennung ist nicht besonders beschränkt.

Ein entsprechendes erfindungsgemäßes Verfahren des ersten Aspekts ist schematisch in Figur 1 gezeigt.

Auf ein Bereitstellen einer Mischung umfassend Calciumoxid und ein Calcium-Aluminium-Oxid und/oder Calciumaluminat in Schritt 1 folgt ein Glühen der Mischung umfassend Calciumoxid und Calcium-Aluminium-Oxid und/oder Calciumaluminat und Abkühlen der Mischung zur Herstellung einer geglühten Mischung in Schritt 2 und eine Zugabe der geglühten Mischung zum Gewässer umfassend Sulfat in Schritt 3, wobei das Sulfat gebunden wird.

Weiterhin offenbart ist ein Verfahren zur Bindung von Sulfat in einem Gewässer umfassend Sulfat, das Verfahren umfassend:
Bereitstellen einer Mischung, insbesondere Pulvermischung, umfassend CaO und mindestens ein Mineral der Mayenit-Obergruppe, bevorzugt umfassend Mayenit der Summenformel Ca₆Al₇O_{16.5} (bzw. Ca₁₂Al₁₄O₃₃),
und/oder mindestens ein Calcium-Aluminium-Alumosilikat und/oder mindestens ein Calciumalumosilikat und/oder mindestens ein Calciumsilikat,
wobei zumindest das Calcium in einem Massenanteil von 27,0 - 45,0 Gew.%, bevorzugt 30,0 - 40,0 Gew.%, weiter bevorzugt 32,0 - 37,0 Gew.%, und das Aluminium in einem Massenanteil von 20,0 - 28,0 Gew.%, bevorzugt 21,0 - 27,5 Gew.%, weiter bevorzugt 21,5 - 25,5 Gew.%, bezogen auf die Mischung, insbesondere Pulvermischung, in der Mischung, insbesondere Pulvermischung, enthalten ist; und
Zugabe der Mischung umfassend CaO und mindestens ein Mineral der Mayenit-Obergruppe und/oder umfassend mindestens ein Calcium-Aluminium-Alumosilikat und/oder mindestens ein Calciumalumosilikat und/oder ein Calciumsilikat zum Gewässer umfassend Sulfat, wobei das Sulfat gebunden wird.

Das Bereitstellen der Mischung, insbesondere Pulvermischung, umfassend CaO und mindestens ein Mineral der Mayenit-Obergruppe, bevorzugt umfassend Mayenit der Summenformel Ca₆Al₇O_{16.5} (bzw. Ca₁₂Al₁₄O₃₃),
und/oder mindestens ein Calcium-Aluminium-Alumosilikat und/oder mindestens ein Calciumalumosilikat und/oder mindestens ein Calciumsilikat ist hierbei nicht besonders beschränkt.

Die Mischung, insbesondere Pulvermischung, umfasst mindestens CaO (Calciumoxid) und mindestens ein Mineral der Mayenit-Obergruppe, bevorzugt umfassend Mayenit der Summenformel Ca₆Al₇O_{16.5} (bzw. Ca₁₂Al₁₄O₃₃),
und/oder mindestens ein Calcium-Aluminium-Alumosilikat und/oder mindestens ein Calciumalumosilikat und/oder mindestens ein Calciumsilikat. Gemäß bestimmten Ausführungsformen umfasst die Mischung, insbesondere Pulvermischung, mindestens CaO und ein Mineral der Mayenit-Obergruppe, bevorzugt Mayenit. Gemäß bestimmten Ausführungsformen umfasst die Mischung, insbesondere Pulvermischung, mindestens CaO, Mayenit und ein Calciumsilikat wie beispielsweise Alit (Ca₃SiO₅). Bevorzugt ist hier Mayenit die Hauptkomponente in der Pulvermischung mit mehr als 50 Gew.%, bevorzugt mehr als 80 Gew.%, weiter bevorzugt mehr als 85 Gew.%, bezogen auf die Pulvermischung (.d.h. 100 Gew.% Pulvermischung). Eine entsprechende Mischung, insbesondere Pulvermischung, kann insbesondere bei einem Glühen, wie es im Verfahren des ersten Aspekts beschrieben ist, gewonnen werden.

In der Mischung, insbesondere Pulvermischung, ist zumindest das Calcium in einem Massenanteil von 27,0 - 45,0 Gew.%, bevorzugt 30,0 - 40,0 Gew.%, weiter bevorzugt 32,0 - 37,0 Gew.%, und das Aluminium in einem Massenanteil von 20,0 - 28,0 Gew.%, bevorzugt 21,0 - ≤27,5 Gew.%, weiter bevorzugt 21,5 - 25,5 Gew.%, bezogen auf die Mischung, insbesondere Pulvermischung, in der Mischung, insbesondere Pulvermischung, enthalten. Durch die entsprechende Einstellung der Anteile erfolgt eine effizientere Sulfatbindung.

Gemäß bestimmten Ausführungsformen ist die Mischung eine Pulvermischung. Gemäß bestimmten Ausführungsformen umfasst die Pulvermischung Partikel mit einer Partikelgröße von > 0.0 bis kleiner oder gleich 20,0 mm, bevorzugt mit einer Partikelgröße von > 0,0 bis kleiner oder gleich 10,0 mm, weiter bevorzugt mit einer Partikelgröße von > 0,0 bis kleiner oder gleich 5,0 mm, noch weiter bevorzugt mit einer Partikelgröße von > 0,0 bis kleiner oder gleich 1,0 mm, z.B. mit einer Partikelgröße von > 0,0 bis kleiner oder gleich 0,5 mm, oder besteht bevorzugt aus solchen Partikeln. Die Partikelgröße wird hierbei gemäß bestimmten Ausführungsformen durch Sieben der Pulvermischung bestimmt.

Gemäß bestimmten Ausführungsformen erfolgt die Zugabe der Mischung, insbesondere Pulvermischung, umfassend CaO und mindestens ein Mineral der Mayenit-Obergruppe und/oder umfassend mindestens ein Calcium-Aluminium-Alumosilikat und/oder mindestens ein Calciumalumosilikat und/oder ein Calciumsilikat zum Gewässer umfassend Sulfat durch Verteilung der geglühtem Mischung in das Gewässer und/oder erfolgt nach der Zugabe ein natürliches und/oder künstlich herbeigeführtes Durchmischen, wobei bevorzugt das Durchmischen nach der Zugabe für mindestens 30 min, bevorzugt mindestens 1 h, bevorzugt mindestens 2 h erfolgt. Die Verteilung ist nicht besonders beschränkt und kann beispielsweise ein Verstreuen umfassen. Eine homogene Verteilung ist hierbei bevorzugt. Ein natürlich und/oder künstlich herbeigeführtes Durchmischen lässt sich beispielsweise durch Einbringen in eine natürliche Strömung und/oder ein Erzeugen einer künstlichen Strömung erreichen. Durch die Verteilung und/oder das Durchmischen kann die geglühte Mischung schneller zur Sulfatreduktion beitragen und Nebenreaktionen können besser vermieden werden. Eine längere Durchmischung fördert die Sulfatbindung.

Vor der Zugabe der Mischung, insbesondere Pulvermischung, umfassend CaO und mindestens ein Mineral der Mayenit-Obergruppe und/oder umfassend mindestens ein Calcium-Aluminium-Alumosilikat und/oder mindestens ein Calciumalumosilikat und/oder ein Calciumsilikat zum Gewässer kann das Gewässer gemäß bestimmten Ausführungsformen noch auf einen geeigneten pH gebracht werden, beispielsweise in einem pH-Bereich von 6,0 bis 13,0, beispielsweise 7,0 bis 12,5, bevorzugt 10,0 bis 12,0, beispielsweise ungefähr 11,0. Ggf. kann der pH geeignet durch beispielsweise CaO und/oder NaOH und/oder Kalkmilch eingestellt werden.

Nach der Sulfatbindung kann ein gebildetes Produkt aus dem Gewässer gemäß bestimmten Ausführungsformen geeignet abgetrennt werden, also eine Abtrennung des Produkts mit dem gebundenen Sulfat erfolgen. Die Abtrennung ist nicht besonders beschränkt.

Ein beispielhaftes Verfahren des zweiten Aspekts ist schematisch in Figur 2 gezeigt. Auf ein Bereitstellen einer Mischung, insbesondere Pulvermischung, umfassend CaO und mindestens ein Mineral der Mayenit-Obergruppe, bevorzugt umfassend Mayenit der Summenformel Ca₆Al₇O_{16.5} (bzw. Ca₁₂Al₁₄O₃₃), und/oder mindestens ein Calcium-Aluminium-Alumosilikat und/oder mindestens ein Calciumalumosilikat und/oder mindestens ein Calciumsilikat, wobei zumindest das Calcium in einem Massenanteil von 27,0 - 45,0 Gew.%, bevorzugt 30,0 - 40,0 Gew.%, weiter bevorzugt 32,0 - 37,0 Gew.%, und das Aluminium in einem Massenanteil von 20,0 - 28,0 Gew.%, bevorzugt 21,0 - ≤27,5 Gew.%, weiter bevorzugt 21,5 - 25,5 Gew.%, bezogen auf die Pulvermischung, in der Pulvermischung enthalten ist, in Schritt 2 a folgt eine Zugabe der Mischung umfassend CaO und mindestens ein Mineral der Mayenit-Obergruppe und/oder umfassend mindestens ein Calcium-Aluminium-Alumosilikat und/oder mindestens ein Calciumalumosilikat und/oder ein Calciumsilikat zum Gewässer umfassend Sulfat in Schritt 3a, wobei das Sulfat gebunden wird.

Weiterhin offenbart ist eine geglühte Mischung zur Sulfatbindung in einem Gewässer, hergestellt durch Bereitstellen einer Mischung umfassend Calciumoxid und ein Calcium-Aluminium-Oxid und/oder ein Calciumaluminat; und
Glühen der Mischung umfassend Calciumoxid und ein Calcium-Aluminium-Oxid und/oder ein Calciumaluminat und Abkühlen der Mischung zur Herstellung einer geglühten Mischung zur Sulfatbindung in einem Gewässer. Die geglühte Mischung wird insbesondere bei einem Verfahren des ersten Aspekts gewonnen und eignet sich entsprechend hervorragend zur Sulfatbindung. Die geglühte Mischung enthält hierbei bevorzugt zumindest Mayenit und ein Calciumsilikat wie beispielsweise Alit (Ca3SiO5). Bevorzugt ist hier Mayenit die Hauptkomponente in der Pulvermischung mit mehr als 50 Gew.%, bevorzugt mehr als 80 Gew.%, weiter bevorzugt mehr als 85 Gew.%, bezogen auf die Pulvermischung (.d.h. 100 Gew.% Pulvermischung).

Das Glühen wird hierbei bevorzugt bei einer Temperatur von 800 bis 1500°C, weiter bevorzugt bei einer Temperatur von 900 bis 1450°C, noch weiter bevorzugt bei einer Temperatur von 950 bis 1400°C durchgeführt, und ist nicht besonders beschränkt, wie auch nicht das Abkühlen. Diese können wie beim ersten Aspekt beschrieben durchgeführt werden. Das Ausgangsedukt entspricht hier insbesondere dem im ersten Aspekt beschriebenen. Entsprechend können die dort beschriebenen Aspekte auch auf die geglühte Mischung zur Sulfatbindung Anwendung finden.

Weiterhin offenbart ist ein Produkt umfassend gebundenes Sulfat, welches durch ein erfindungsgemäßes Verfahren gemäß dem ersten oder zweiten Aspekt hergestellt ist. Dieses umfasst insbesondere das Sulfat gebunden als Ettringit (Ca₆AL₂(SO₄)₃(OH)₁₂x 26 H₂O), wobei daneben aber auch andere sulfathaltige Verbindungen wie Orschallit (Ca₃(SO₃)₂(SO₄)(H₂O)₁₂) und/oder weitere Verbindungen wie Calcit (CaCO₃) und/oder Bayerit (Al(OH)₃) im Produkt enthalten sein können und bevorzugt enthalten sind. Auch weißt das Produkt vorzugsweise eine hervorragende Partikelgrößenverteilung aufgrund der Ausgangsverbindung auf und ist entsprechend hervorragend zur Weiterverwendung, beispielsweise als Zuschlagsstoff in der Beton- und/oder Zementherstellung, oder auch bei der Herstellung von Putz oder Mörtel, geeignet.

Zudem offenbart ist die Verwendung einer Mischung, insbesondere Pulvermischung, umfassend CaO und mindestens ein Mineral der Mayenit-Obergruppe und/oder umfassend mindestens ein Calcium-Aluminium-Alumosilikat und/oder mindestens ein Calciumalumosilikat und/oder ein Calciumsilikat und/oder einer erfindungsgemäßen geglühten Mischung zur Sulfatbindung in einem Gewässer. Wie oben dargelegt sind diese Pulvermischung und/oder geglühte Mischung insbesondere zur Sulfatbindung in bestimmten Gewässern mit niedrigerem Sulfatanteil hervorragend geeignet, also beispielsweise Gewässern, welche keine Industrieabwässer sind.

Die obigen Ausführungsformen, Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird der Fachmann auch Einzelaspekte als Verbesserungen oder Ergänzungen zu der jeweiligen Grundform der vorliegenden Erfindung hinzufügen.

Die Erfindung wird im Anschluss mit Bezug auf verschiedene Beispiele davon weiter im Detail erläutert. Die Erfindung ist jedoch nicht auf diese Beispiele beschränkt.

### Beispiele

### Referenzbeispiel 1

Ein natürliches Mineralgemisch, welches als Hauptphasen Gehlenit, Krotit, Grossit, Calcio-Olivin und Mayenit, bestimmt mittels Röntgenbeugung (XRD) derart enthielt, dass ein Gewichtsanteil von Ca 25,5 Gew.% und ein Gewichtsanteil von Al 27,5 Gew.% war, wurde mittels Kugelmühle gemahlen und die Fraktion mit einer Korngröße kleiner 0,5 mm wurde aus dem gemahlenen Mineralgemisch ausgesiebt und für weitere Versuche verwendet.

Die XRD-Messung erfolgte dabei gemäß DIN EN 13925-1, -2:2003. -3: 2005 und DIN EN 1330-11:2007 mit Bragg-Brentano-Geometrie im Reflexionsmodus mit einem PANalytical "AERIS research" Diffraktometer mit Cu Kα Strahlung bei 1,5418 Angström.

Das so erhaltene gemahlene Mineralgemisch wurde als Vergleichsmischung "V1" bezeichnet.

Ein Teil des Mineralgemisches wurde mit CaO (Calcium oxide powder; CAS 1305-78-8; >96%; Product: 22645.360, VWR Chemicals) in einem Massenverhältnis von 80:20 (w/w) gemischt und bei 1000°C für 6 h in einem Keramiktiegel im Muffelofen geglüht. Danach wurde die entsprechend hergestellte Mischung im Exsikkator auf Raumtemperatur abkühlen gelassen. Der Massenverlust beim Glühen war 4,23 Gew.%. Die so erhaltene Mischung wurde als Beispielmischung "B1" bezeichnet. Die geglühte Mischung B1 wurde ebenfalls mittels XRD, wie oben, untersucht, und es ergab sich ein Gewichtsanteil von Ca von 34,7 Gew.% und ein Gewichtsanteil von Al von 23,8 Gew.%, mit den Hauptphasen Mayenit, Alit, Portlandit und Katoit.

Zudem wurde ein Teil der Vergleichsmischung V1 bei 1000°C entsprechend der Beispielmischung B1 für 6 h in einem Keramiktiegel im Muffelofen geglüht und dann die entsprechend hergestellte Mischung im Exsikkator auf Raumtemperatur abkühlen gelassen. Der Glühverlust betrug 0,68 Gew.%. Die so erhaltene Mischung wird als Vergleichsmischung "V2" bezeichnet.

### Beispiele 1 und 2 und Vergleichsbeispiele 1 bis 4

Ein artifizielles sulfathaltiges Gewässer wurde durch Einwaage von Natriumsulfat (Na₂SO₄) und Zugabe und Lösung in Leitungswasser mit einer Konzentration von 0,2 g/L hergestellt und der pH auf 11,0 mit CaO und/oder Na OH und/oder Kalkmilch eingestellt.

Zu entsprechenden Probemengen des so hergestellten sulfathaltigen Leitungswassers wurden die Vergleichsmischungen V1 und V2 wie auch CaO selbst sowie die Beispielmischung B1 bei den in Tabelle 1 angegebenen Temperaturen zu einer finalen Konzentration von 10 g/L von V1, V2, CaO bzw. B1 zugegeben und die so hergestellten Proben für 24 h mittels eines Magnetrührers mit 250 Umdrehungen pro Minute gerührt. Es bildeten sich teilweise Sedimente, und der Überstand wurde durch einen Calciumacetatfilter mit 0,45 µm Porengröße bzw. 0,25 µm Porengröße bei Beispiel 1 filtriert.

Der Sulfatgehalt wurde mittels Metrohm lonenchromatograph (IC Metrohm 881) bestimmt. Das Laufmittel setzt sich aus 5,2995 g Na₂CO₃ und 0,168 g NaHCOs pro 1000 ml Reinstwasser zusammen. Sulfat wurde mittels Multielement Standard kalibriert, zum Erhalt einer Kalibriergeraden mit einem r² von 0,998 zwischen 1 - 50 mg/L Sulfat. Die Ergebnisse der Sulfatreduktion im Vergleich zum ursprünglichen Sulfatgehalt ist prozentual in Tabelle 1 angegeben.

**Tabelle 1: Ergebnisse der Sulfatreduktion**

| Versuch | Temperatur [°C] | Zugegebene Substanz | Sulfatreduktion [% (w/w)] |
|---|---|---|---|
| Beispiel 1 | 18-20°C | B1 | 99,0 |
| Vergleichsbeispiel 1 | 18-20°C | V1 | 0 |
| Beispiel 2 | 31°C | B1 | 99,3 |
| Vergleichsbeispiel 2 | 31°C | V1 | 94,7 |
| Vergleichsbeispiel 3 | 31°C | V2 | 95,2 |
| Vergleichsbeispiel 4 | 31°C | CaO | 0 |

Bei Beispiel 1 wurde zusätzlich eine Probe nach 3 h entnommen und entsprechend filtriert. Hierbei war die Sulfatreduktion (w/w) bereits 96,0 % und lag damit schon oberhalb der Werte von Vergleichsbeispielen 2 und 3 nach 24 h Rühren.

Es zeigt sich, dass durch ein längeres Durchmischen eine erhöhte Sulfatreduktion erzielen lässt. Jedoch ist auch wohl die Temperatur bei der Sulfatreduktion von Einfluss, wobei diese mit Mischung B1 weniger Einfluss hat als mit Mischung V1, die bei niedrigen Temperaturen keine Sulfatreduktion erzielte, wie auch generell nicht das CaO alleine. Aber selbst bei erhöhter Temperatur von 31°C war die erfindungsgemäße Mischung B1 der Vergleichsmischung V2 in unerwarteter Höhe der Sulfatentfernung überlegen, was entsprechend auf die zusätzliche Anwesenheit des extra CaO beim Glühen zurückzuführen ist (Verringerung von 99,3% im Vergleich zu 95,2%), wobei die geglühte Mischung V2 der ungeglühten Mischung V1 nur geringfügig überlegen war.

## Patentansprüche

1. Verfahren zur Bindung von Sulfat in einem Gewässer umfassend Sulfat, das Verfahren umfassend:
Bereitstellen einer Mischung umfassend Calciumoxid und ein Calcium-Aluminium-Oxid und/oder Calciumaluminat;
Glühen der Mischung umfassend Calciumoxid und Calcium-Aluminium-Oxid und/oder Calciumaluminat und Abkühlen der Mischung zur Herstellung einer geglühten Mischung; und
Zugabe der geglühten Mischung zum Gewässer umfassend Sulfat, wobei das Sulfat gebunden wird.

2. Verfahren nach Patentanspruch 1, wobei das Glühen bei einer Temperatur von 800 bis 1500°C, bevorzugt bei einer Temperatur von 900 bis 1450°C, weiter bevorzugt bei einer Temperatur von 950 bis 1400°C durchgeführt wird.

3. Verfahren nach Patentanspruch 1 oder 2, wobei die Mischung Calciumoxid und ein Mineraliengemisch umfassend Calcium-Aluminium-Oxid und/oder Calciumaluminat enthält, wobei die Mischung umfassend Calciumoxid und ein Mineralgemisch umfassend Calcium-Aluminium-Oxid und/oder Calciumaluminat das Calciumoxid und das Mineralgemisch umfassend Calcium-Aluminium-Oxid und/oder Calciumaluminat in einem Verhältnis (w/w) von 5:95 bis 50: 50, bevorzugt 10:90 bis 30:70 enthält.

4. Verfahren nach einem der vorigen Patentansprüche, wobei die Mischung umfassend Calciumoxid und Calcium-Aluminium-Oxid vor dem Glühen vermengt und gemahlen wird, bevorzugt mit einer Kugelmühle.

5. Verfahren nach Patentanspruch 4, wobei das Vermengen und Mahlen zu einer Partikelgröße von > 0.0 bis kleiner oder gleich 20,0 mm, bevorzugt zu einer Partikelgröße von > 0,0 bis kleiner oder gleich 10,0 mm, weiter bevorzugt zu einer Partikelgröße von > 0,0 bis kleiner oder gleich 5,0 mm, noch weiter bevorzugt bis zu einer Partikelgröße von > 0,0 bis kleiner oder gleich 1,0 mm erfolgt.

6. Verfahren nach einem der vorigen Patentansprüche, wobei die Zugabe der geglühten Mischung zum Gewässer umfassend Sulfat durch Verteilung der geglühten Mischung in das Gewässer erfolgt und/oder nach der Zugabe ein natürliches und/oder künstlich herbeigeführtes Durchmischen erfolgt.

7. Verfahren nach Patentanspruch 6, wobei das Durchmischen nach der Zugabe für mindestens 30 min, bevorzugt mindestens 1 h, bevorzugt mindestens 2 h erfolgt.

8. Verfahren zur Bindung von Sulfat in einem Gewässer umfassend Sulfat, das Verfahren umfassend:
Bereitstellen einer Mischung, insbesondere Pulvermischung, umfassend CaO und mindestens ein Mineral der Mayenit-Obergruppe, bevorzugt umfassend Mayenit der Summenformel Ca₆Al₇O_{16.5},
und/oder mindestens ein Calcium-Aluminium-Alumosilikat und/oder mindestens ein Calciumalumosilikat und/oder mindestens ein Calciumsilikat,
wobei zumindest das Calcium in einem Massenanteil von 27,0 - 45,0 Gew.%, bevorzugt 30,0 - 40,0 Gew.%, weiter bevorzugt 32,0 - 37,0 Gew.%, und das Aluminium in einem Massenanteil von 20,0 - 28,0 Gew.%, bevorzugt 21,0 - ≤27,5 Gew.%, weiter bevorzugt 21,5 - 25,5 Gew.%, bezogen auf die Mischung, insbesondere Pulvermischung, in der Mischung, insbesondere Pulvermischung, enthalten ist; und
Zugabe der Mischung umfassend CaO und mindestens ein Mineral der Mayenit-Obergruppe und/oder umfassend mindestens ein Calcium-Aluminium-Alumosilikat und/oder mindestens ein Calciumalumosilikat und/oder ein Calciumsilikat zum Gewässer umfassend Sulfat, wobei das Sulfat gebunden wird.

9. Verfahren nach Patentanspruch 8, wobei die Zugabe der Pulvermischung umfassend CaO und mindestens ein Mineral der Mayenit-Obergruppe und/oder umfassend mindestens ein Calcium-Aluminium-Alumosilikat und/oder mindestens ein Calciumalumosilikat und/oder ein Calciumsilikat zum Gewässer umfassend Sulfat durch Verteilung der geglühtem Mischung in das Gewässer erfolgt und/oder nach der Zugabe ein natürliches und/oder künstlich herbeigeführtes Durchmischen erfolgt, bevorzugt wobei das Durchmischen nach der Zugabe für mindestens 30 min, bevorzugt mindestens 1 h, bevorzugt mindestens 2 h erfolgt.

10. Geglühte Mischung zur Sulfatbindung in einem Gewässer, hergestellt durch Bereitstellen einer Mischung umfassend Calciumoxid und ein Calcium-Aluminium-Oxid und/oder ein Calciumaluminat; und
Glühen der Mischung umfassend Calciumoxid und ein Calcium-Aluminium-Oxid und/oder ein Calciumaluminat und Abkühlen der Mischung zur Herstellung einer geglühten Mischung zur Sulfatbindung in einem Gewässer.

11. Produkt umfassend gebundenes Sulfat, hergestellt nach einem der Patentansprüche 1 bis 9.

12. Verwendung einer Mischung, insbesondere Pulvermischung, umfassend CaO und mindestens ein Mineral der Mayenit-Obergruppe und/oder umfassend mindestens ein Calcium-Aluminium-Alumosilikat und/oder mindestens ein Calciumalumosilikat und/oder ein Calciumsilikat und/oder einer geglühten Mischung nach Patentanspruch 10 zur Sulfatbindung in einem Gewässer.
